**Europäisches Patentamt**

**European Patent Office**

**Office européen des brevets**

(19)

(11) **EP 1 276 642 B1**

(12) **EUROPÄISCHE PATENTSCHRIFT**

(45) Veröffentlichungstag und Bekanntmachung des Hinweises auf die Patenterteilung:
**22.10.2003 Patentblatt 2003/43**

(21) Anmeldenummer: **01931407.9**

(22) Anmeldetag: **05.04.2001**

(51) Int Cl.⁷: **B60R 21/01**

(86) Internationale Anmeldenummer:
**PCT/DE01/01319**

(87) Internationale Veröffentlichungsnummer:
**WO 01/079035 (25.10.2001 Gazette 2001/43)**

(54) **ANORDNUNG ZUM ERKENNEN EINES BEVORSTEHENDEN ÜBERROLLVORGANGES EINES FAHRZEUGS**

DEVICE FOR RECOGNIZING AN OVERTURN PROCESS OF A VEHICLE

DISPOSITIF POUR RECONNAITRE L'IMMINENCE D'UN CAPOTAGE D'UN VEHICULE

(84) Benannte Vertragsstaaten:
**DE FR GB SE**

(30) Priorität: **19.04.2000 DE 10019417**

(43) Veröffentlichungstag der Anmeldung:
**22.01.2003 Patentblatt 2003/04**

(73) Patentinhaber: **ROBERT BOSCH GMBH**
**70442 Stuttgart (DE)**

(72) Erfinder:
• **MATTES, Berhard**
**74343 Sachsenheim (DE)**
• **KISSNER, Juergen**
**71701 Schwieberdingen (DE)**
• **WOTTRENG, Walter**
**Takasaki-shi, Gunama-ken 370-084 (JP)**
• **LANG, Hans-Peter**
**71638 Ludwigsburg (DE)**
• **KNOEDLER, Kosmas**
**74321 Bietigheim-Bissingen (DE)**

(56) Entgegenhaltungen:
DE-A- 19 744 083          US-A- 5 610 575
US-A- 6 038 495

**Beschreibung**

Stand der Technik

Die vorliegende Anmeldung betrifft eine Anordnung zum Erkennen eines bevorstehenden Überrollvorganges eines Fahrzeugs, welche in Abhängigkeit vom Neigungswinkel des Fahrzeugs um seine Längsachse eine kritische Drehrate des Fahrzeugs um die Längsachse ermittelt, die erforderlich wäre, um ein Überrollen hervorzurufen.

Eine solche Anordnung ist aus der DE 197 44 083 A1 bekannt. Wie dieser Druckschrift zu entnehmen ist, entspricht die kritische Drehrate einer Rotationsenergie des Fahrzeugs, die gerade die potentielle Energie des Fahrzeugs übersteigt. Ist das nämlich der Fall, d.h. ist die kritische Drehrate erreicht, so wird es mit Sicherheit zu einem Überrollen des Fahrzeugs kommen. Es wird also frühzeitig ein Überrollen des Fahrzeugs prognostiziert, so dass rechtzeitig vor dem tatsächlichen Überrollen im Fahrzeug vorhandene Sicherheitseinrichtungen (z.B. Airbags, Überrollbügel etc.) ausgelöst werden können. Mit dem genannten, eine kritische Drehrate bestimmenden Kriterium läßt sich mit hoher Zuverlässigkeit ein bevorstehender Überrollvorgang bei Fahrmanövern erkennen, bei denen zum einen der Schwerpunkt des Fahrzeugs im Schwerefeld der Erde um eine bestimmte Höhe angehoben wird, beispielsweise beim Überfahren einer Rampe, und zum anderen das Fahrzeug Bodenkontakt hat. Bei einer solchen Rampenüberfahrt erfährt das Fahrzeug eine Umwandlung von Rotationsenergie in potentielle Energie. Ein anderes Fahrmanöver stellen die sog. Böschungsfahrten dar, bei denen das Auto über eine Böschung fährt und dadurch zum Kippen kommt. Bei einem Böschungskippen wird anders als bei Rampenüberfahrten potentielle Energie in Rotationsenergie umgewandelt; das Fahrzeug kippt nämlich ohne äußere Einflüsse (abgesehen von der Schwerkraft) die Böschung hinunter.

Es zeigt sich, dass das eingangs dargelegte und aus der DE 197 44 083 A1 bekannnte Kriterium, nach dem eine kritische Drehrate zur Erkennung eines bevorstehenden Überrollvorgangs ermittelt wird, für Böschungskippen nicht tauglich ist, weil es eine zu frühe Entscheidung für einen Überrollvorgang trifft. Ein weiteres, in der DE 197 44 083 A1 beschriebenes Kriterium, das als Winkelkriterium bezeichnet werden kann, ist ebenfalls nicht geeignet für eine rechtzeitige Erkennung eines Überrollvorgangs. Dieses Winkelkriterium basiert darauf, dass die von einem Drehratensensor gelieferten Drehratensignale gefiltert und über eine gewisse Zeitdauer integriert werden. Der daraus entstehende mittlere Winkel entspricht in guter Näherung dem tatsächlichen aktuellen Neigungswinkel des Fahrzeugs, der mit einem fahrzeugspezifischen kritischen Winkel verglichen wird, ab welchem die Fahrzeuglage instabil wird. Das Winkelkriterium hat den Nachteil, dass es erst relativ spät eine Entscheidung trifft, ob es zu einem Überrollen des Fahrzeugs kommt oder nicht, nämlich erst dann, wenn der fahrzeugspezifische kritische Neigungswinkel erreicht ist.

Der Erfindung liegt daher die Aufgabe zugrunde, eine Anordnung der eingangs genannten Art anzugeben, welche bei einem Fahrmanöver, wie Böschungskippen, einen bevorstehenden Überrollvorgang rechtzeitig - weder zu spät noch zu früh - erkennt.

Vorteile der Erfindung

Die genannte Aufgabe wird mit den Merkmalen des Anspruchs 1 dadurch gelöst, dass die Anordnung für den Fall, dass sie ein für ein Böschungskippen charakteristisches Bewegungsverhalten des Fahrzeugs detektiert, einen Vorhersagewert für die Drehrate des Fahrzeugs nach einem fiktiven Aufprall der Räder an einer Fahrzeuglängsseite auf den Boden aus einer vor dem fiktiven Aufprall herrschenden Drehrate, dem Impuls des Fahrzeugs in Richtung seiner Hochachse und dem Drehimpuls um den Fahrzeug-Schwerpunkt vor dem fiktiven Aufprall ermittelt und dass sie einen bevorstehenden Überrollvorgang signalisiert, wenn der Vorhersagewert der Drehrate eine kritische Drehrate übersteigt.

Für den Spezialfall einer Böschungsabfahrt, bei der potentielle Energie des Fahrzeugs in Rotationsenergie umgewandelt wird, führt die erfindungsgemäße Anwendung einer Impulsbilanz zur Ermittlung eines Vorhersagewertes für die Drehrate des Fahrzeugs nach dem Kippen über die Böschungskante zu einer rechtzeitigen Erkennung einer zu einem Überrollen führenden Situation.

Eine vorteilhafte Weiterbildung der Erfindung geht aus dem Unteranspruch hervor.

Zeichnung

Die Erfindung wird anhand von in der Zeichnung dargestellten Ausführungsbeispielen näher erläutert. Es zeigen:

Figur 1 ein Blockschaltbild einer Anordnung zum Erkennen eines bevorstehenden Überrollvorganges eines Fahrzeugs, Figur 2 ein Ablaufdiagramm zur Ermittlung von Überrollentscheidungen,
Figur 3 eine geometrische Darstellung zur Verdeutlichung des Energiekriteriums,
Figur 4 eine geometrische Darstellung zur Verdeutlichung des Böschungskippens und
Figur 5 eine geometrische Darstellung zur Verdeutlichung des Impulskriteriums.

Beschreibung von Ausführungsbeispielen

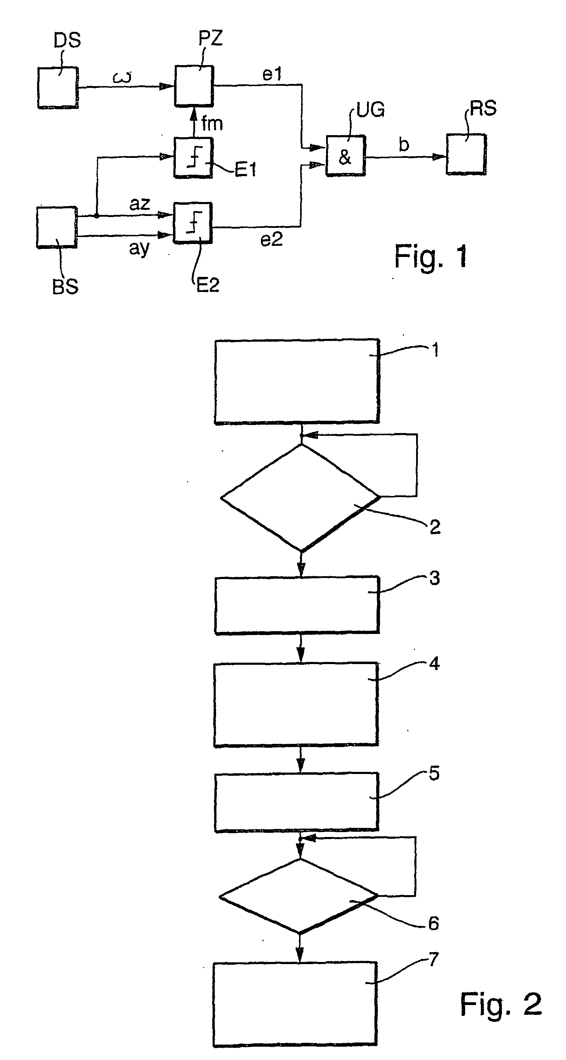

Die in der Figur 1 dargestellte Anordnung zum Erkennen eines bevorstehenden Überrollvorganges eines Fahrzeugs weist ein oder mehrere Drehratensensoren DS auf, die mindestens die Drehrate ω um eine Achse in Längsrichtung des Fahrzeugs messen. Die mindestens eine gemessene Drehrate ω wird einem Prozessor PZ zugeführt, der eine Überrollentscheidung e1 ermittelt. Eine Entscheiderschaltung E1 ermittelt aus dem aktuellen Bewegungsverhalten des Fahrzeugs, das sie mindestens aus der von einem Beschleunigungssensor BS erfaßten Beschleunigung des Fahrzeugs az in Richtung seiner Hochachse ableitet, ob es sich um ein Fahrmanöver in der Art eines Böschungskippens handelt.

Erhält der Prozessor eine Information fm über eine Böschungsfahrt, so ermittelt er anhand eines unten noch detailliert beschriebenen Kriteriums, ob es zu einem Überrollen des Fahrzeugs kommen wird. Wenn ja, gibt er eine Überrollentscheidung e1 ab.

Um die Zuverlässigkeit der vom Prozessor PZ ermittelten Überrollentscheidung zu erhöhen, kann die Überrollentscheidung e1 des Prozessors PZ einer Plausibilitätsprüfung unterzogen werden. Dazu ist ein Entscheider E2 vorgesehen, der die in Richtung der Hochachse z des Fahrzeugs gemessene Beschleunigung az und die in Richtung der Fahrzeugquerachse y gemessene Beschleunigung ay mit vorgegebenen Schwellenwerten vergleicht. Werden diese Schwellenwerte überschritten, so gibt der Entscheider E2 ebenfalls eine Überrollentscheidung e2 ab, die wie die Überrollentscheidung e1 aus dem Prozessor PZ einem UND-Gatter UG zugeführt wird. Nur wenn beide Überrollentscheidungen e1, e2 einen bevorstehenden Überrollvorgang signalisieren, gibt das UND-Gatter UG eine endgültige Überrollentscheidung b ab, welche eine Auslösung von Rückhaltesystemen RS (z.B. Airbags, Überrollbügel etc.) bewirkt. Auf die Plausibilitätsprüfung kann aber auch verzichtet werden. Dann führt die Überrollentscheidung e1 des Prozessors PZ direkt zu einer Auslösung der Rückhaltesysteme RS.

In der Figur 2 ist ein Ablaufdiagramm dargestellt, anhand dessen die im Prozessor PZ ablaufende Herleitung einer Überrollentscheidung e1 nachfolgend erläutert wird.

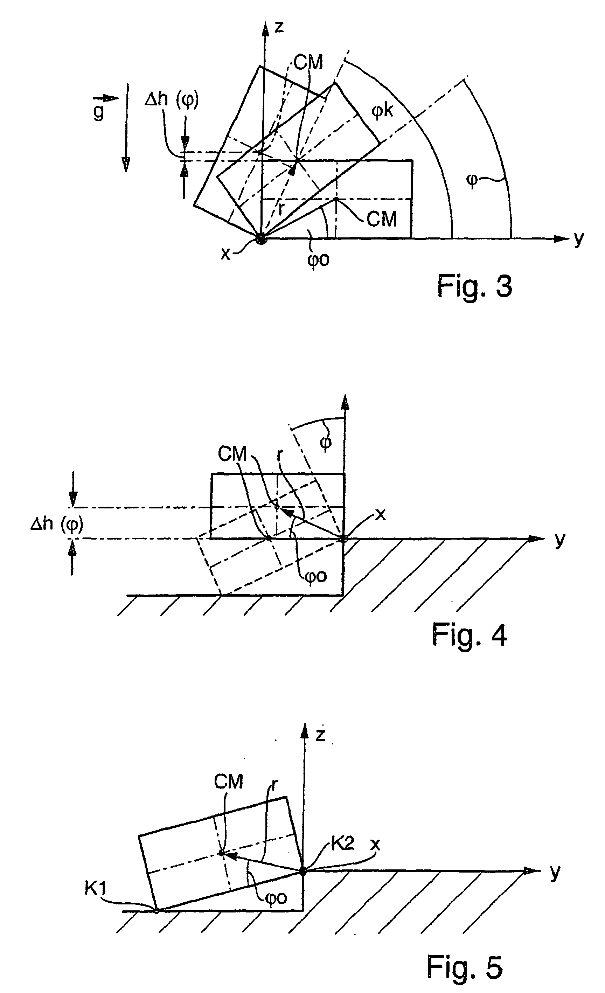

In einem ersten Verfahrensschritt 1 wird nach einem sogenannten Energiekriterium eine kritische Drehrate ωk ermittelt. Wie es zu dieser kritischen Drehrate ωk kommt, verdeutlicht die geometrische Darstellung in der Figur 3. Dabei ist das Fahrzeug mit seinem Schwerpunkt CM als einfacher Quader dargestellt. Von dem eingezeichneten Koordinatensystem weist die z-Achse in Richtung der Hochachse, die y-Achse in Richtung der Querachse und die x-Achse in Richtung der Längsachse des Fahrzeugs. Es sind zwei verschiedene Neigungswinkel φ und φk des Fahrzeugs um die x-Achse dargestellt, welche hier z. B. entlang der Räder an einer Fahrzeugseite verläuft. Der Winkel φ0 beschreibt die Lage des Schwerpunktes CM relativ zur Querachse y des Fahrzeugs. Das Koordinatensystem ist so orientiert, dass seine z-Achse parallel zum Erdbeschleunigungsvektor g verläuft.

Die zu ermittelnde kritische Drehrate ωk ist diejenige Drehrate, die bei einem aktuellen Neigungswinkel φ erforderlich wäre, so dass es zu einem Überrollen des Fahrzeugs kommt. Die Berechnung dieser kritischen Drehrate ωk erfolgt durch Gleichsetzen der potentiellen Energie des Fahrzeugs, die erforderlich ist, um den Fahrzeugschwerpunkt CM im Schwerefeld der Erde um eine Höhe Δh anzuheben, und der Rotationsenergie des Fahrzeugs bezüglich der Drehachse x. Hat sich das Fahrzeug um eine bestimmte Höhe Δh angehoben, so ist der kritische Winkel φk erreicht. Das ist dann der Fall, wenn der Schwerpunkt CM des Fahrzeugs senkrecht über der Querachse y liegt. Es muß auf ein Überrollen des Fahrzeugs entschieden werden, sobald die vom Drehratensensor DS gelieferte und gefilterte Drehrate größer ist als die für den aktuellen Neigungswinkel φ berechnete kritische Drehrate ωk. Die kritische Drehrate ωk bestimmt sich also wie folgt nach dem Energiekriterium:

$$\Delta Epot = Erot \tag{1}$$

$$m \cdot g \cdot \Delta h(\varphi) = \frac{1}{2} I \cdot \omega k^2(\varphi) \tag{2}$$

$$\omega k(\varphi) = \pm \sqrt{\frac{2mg}{I}} \Delta h(\varphi) \tag{3}$$

In den Gleichungen (1) bis (3) ist mit m die Masse des Fahrzeugs, mit g die Erdbeschleunigung und mit I das Trägheitsmoment des Fahrzeugs bezeichnet. Die Höhendifferenz Δh(φ) bestimmt sich hierbei gemäß Gleichung (4):

$$\Delta h(\varphi) = r (1 - \sin(\varphi + \varphi 0)) \tag{4}$$

In Gleichung (4) ist mit r der Abstand zwischen dem Schwerpunkt CM und dem Auflagepunkt des Fahrzeugs in der x-Achse angegeben.

Die Gleichung (3) gibt zu erkennen, dass der Betrag der kritischen Drehrate ωk mit zunehmendem Winkel φ kleiner wird. Bei Erreichen des kritischen Winkels φk ist keine zusätzliche Drehrate mehr nötig, um das Fahrzeug zum Überrollen zu bringen.

Im Verfahrensschritt 2 wird abgefragt, ob das Fahrverhalten des Fahrzeugs auf ein Böschungskippen hindeutet. Ob es sich um diese spezielle Art von Fahrmanöver handelt, wird, wie bereits im Zusammenhang mit Figur 1 gesagt, von dem Entscheider E1 über das Signal fm dem Prozessor PZ mitgeteilt.

Anhand der Figur 4 wird zunächst erklärt, was unter dem Begriff Böschungskippen zu verstehen ist. Das Böschungskippen ist ein spezielles Fahrmanöver, bei dem sich die beiden Räder einer Längsseite des Fahrzeugs bis zum erneuten Aufprall auf den Untergrund in der Luft befinden. Bei dem in der Figur 4 eingezeichneten Koordinatensystem verläuft die x-Achse parallel zu der Fahrtrichtungsachse des Fahrzeugs und stellt die Drehachse dar, um die sich das Fahrzeug beim Abkippen über die Böschung dreht.

Da, wie bereits einleitend dargelegt, das beschriebene Energiekriterium allein nicht geeignet ist, beim Böschungskippen des Fahrzeugs daraus eine Entscheidung für einen bevorstehenden Überrollvorgang zu treffen, weil nämlich die Überrollentscheidung zu früh vor einem evtl. eintretenden Cberrollvorgang getroffen wird, wird das nachfolgend näher beschriebene Impulskriterium herangezogen. Das Impulskriterium wird im folgenden anhand der in der Figur 5 dargestellten geometrischen Skizze erklärt. Die Grundidee des Impulskriteriums ist die Entwicklung eines physikalischen Modells, welches es erlaubt, während eines Böschungskippens erst bei größeren Neigungswinkeln des Fahrzeugs eine Überrollentscheidung zu treffen. Hierzu wird ähnlich wie beim Energiekriterium das zukünftige Fahrverhalten des Fahrzeugs untersucht.

Beim Böschungskippen wird permanent eine Beziehung zwischen der Drehrate des Fahrzeugs $\omega v$ vor und der Drehrate $\omega n$ nach einem fiktiven Aufprall der sich in der Luft befindlichen Fahrzeugseite hergestellt. Um die gewünschte Beziehung zwischen den Drehraten $\omega v$ und $\omega n$ vor und nach dem Aufprall der sich zuvor in der Luft befindenden Fahrzeugkante K1 herzuleiten, geht man bei der Beschreibung des Stoßes der Kante K1 gegen den Untergrund von einem elastischen Stoß aus. Das Fahrzeug dreht sich also nach dem Aufprall um die Kante Kl. Die Böschungskante K2 selbst sei direkt bei dem Aufprall als nicht mehr vorhanden angenommen. Es werden die Erhaltungssätze für den Schwerpunktsimpuls und für den Drehimpuls bezüglich des Schwerpunktes CM benutzt. Das Fahrzeug wird dabei weiterhin als starrer Körper behandelt.

Wie dem Ablaufdiagramm in Figur 2 zu entnehmen ist, werden nach einer erkannten Böschungsfahrt im Schritt 3 mittels des Drehratensensors DS (s. Figur 1) die Drehrate $\omega v$ während des Kippens des Fahrzeugs über die Böschungskante, also vor einem eventuell noch folgenden Überschlag, und der Drehwinkel $\varphi$ des Fahrzeugs um die Längsachse x gemessen. Zwischen der Drehrate $\omega v$ vor und einer Drehrate $\omega n$ nach einem fiktiven Aufprall des Fahrzeugs, nachdem es über die Böschungskante gekippt ist, besteht folgende Beziehung:

$$\omega n = f(\varphi)\omega v \qquad (5)$$

Bei der Drehrate $\omega v$ handelt es sich um einen Vorhersagewert, aus dem schließlich eine Entscheidung für einen bevorstehenden Überrollvorgang abgeleitet werden kann.

Im Verfahrensschritt 3 wird nun die Funktion f($\varphi$) aus einer Impulsbilanz für den Schwerpunkt CM des Fahrzeugs in Richtung der z-Achse und einer Drehimpulsbilanz um den Schwerpunkt CM auf folgende Weise ermittelt:

Für die z-Komponenten der Impulse bezüglich des Schwerpunktes CM vor und nach dem Aufprall gilt:

$$Pn = Pv + \Delta P \Rightarrow m \cdot vzn = m \cdot vzv + \Delta P \qquad (6)$$

Dabei ist Pv der Impuls vor, Pn der Impuls nach, vzv die z-Komponente der Fahrzeuggeschwindigkeit vor und vzn die z-Komponente der Fahrzeuggeschwindigkeit nach einem Aufprall, und m ist die Fahrzeugmasse.

Für die Drehimpulse vor und nach einem Aufprall des Fahrzeugs gilt:

$$I \cdot \omega n = I \cdot \omega v - r \cdot \cos(\varphi + \varphi 0) \cdot \Delta P \qquad (7)$$

Die Bewegung des Fahrzeugs vor einem Aufprall läßt sich gemäß Gleichung (8) beschreiben:

$$vzv = \omega v \cdot (-r) \cdot \cos(\varphi - \varphi 0) \qquad (8)$$

Während eines Aufpralls im Punkt K1 (s. Figur 5) läßt sich der plastische Stoß des Fahrzeugs wie folgt beschreiben:

$$0 = vn + \omega n \cdot (-r) \cdot \cos(\varphi - \varphi 0) \qquad (9)$$

Aus den Gleichungen (6) bis (9) ergibt sich nun die Funktion f($\varphi$) :

$$f(\varphi) = \frac{1 - \dfrac{mr^2}{I} \cos(\varphi + \varphi 0) \cdot \cos(\varphi - \varphi 0)}{1 + \dfrac{mr^2}{I} \cos^2(\varphi + \varphi 0)} \qquad (10)$$

Im Prozeßschritt 4 wird gemäß Gleichung (11) aus der im Schritt 1 nach dem Energiekriterium ermittelten kritischen Drehrate $\omega k$ und der Funktion f($\varphi$) ein Vorhersagewert für eine kritische Drehrate $\omega nc$ nach einem Aufprall berechnet:

$$\omega nc = \frac{\omega k}{f(\varphi)} \qquad (11)$$

Wird dieser Wert $\omega nc$ durch die im Schritt 5 nach dem Impulskriterium gemäß Gleichung (5) berechnete Drehrate $\omega n$ erreicht bzw. überschritten - diese Schwellwertentscheidung findet im Schritt 6 statt - so gibt der Prozessor PZ gemäß Schritt 7 eine Überrollentscheidung e1 ab.

**Patentansprüche**

1. Anordnung zum Erkennen eines bevorstehenden Überrollvorganges eines Fahrzeugs, welche in Abhängigkeit vom Neigungswinkel (φ) des Fahrzeugs um seine Längsachse (x) eine kritische Drehrate (ωnc) des Fahrzeugs um die Längsachse (x) ermittelt, die erforderlich wäre, um ein Überrollen hervorzurufen, **dadurch gekennzeichnet, dass** die Anordnung für den Fall, dass sie ein für ein Böschungskippen des Fahrzeugs charakteristisches Bewegungsverhalten des Fahrzeugs detektiert, einen Vorhersagewert für die Drehrate (ωn) des Fahrzeugs nach einem fiktiven Aufprall der Räder an einer Fahrzeuglängsseite auf den Boden aus einer vor dem fiktiven Aufprall herrschenden Drehrate (ωv), dem Impuls des Fahrzeugs in Richtung seiner Hochachse (z) und dem Drehimpuls des Fahrzeug-Schwerpunktes (CM) vor dem fiktiven Aufprall ermittelt, und dass sie einen bevorstehenden Überrollvorgang signalisiert, wenn der Vorhersagewert der Drehrate (ωn) die kritische Drehrate (ωnc) übersteigt.

2. Anordnung nach Anspruch 1, **dadurch gekennzeichnet, dass** sie den Vorhersagewert für die Drehrate (ωn) des Fahrzeugs durch Multiplikation der Drehrate (ωv) des Fahrzeugs vor dem fiktiven Aufprall mit einem Faktor

$$f(\varphi) = \frac{1 - \dfrac{mr^2}{l}\cos(\varphi+\varphi 0)\cdot\cos(\varphi-\varphi 0)}{1 + \dfrac{mr^2}{l}\cos^2(\varphi+\varphi 0)}$$

berechnet, wobei I das Trägheitsmoment des Fahrzeugs, m die Fahrzeugmasse, r der Abstand des Fahrzeugschwerpunktes zu den Rädern an einer Längsseite, φ der Neigungswinkel des Fahrzeugs um seine Längsachse (x) und φ0 die Winkellage des Fahrzeugschwerpunktes relativ zur Querachse (y) des Fahrzeuges ist, und dass die Anordnung die kritische Drehrate

$$\omega nc = \frac{\omega k}{f(\varphi)}$$

berechnet, wobei gilt:

$$\omega k = \pm\sqrt{\frac{2mg}{l}r(1 - \sin(\varphi + (\varphi 0))}$$

(g ist Erdbeschleunigung).

**Claims**

1. Arrangement for detecting an imminent rollover of a vehicle, which determines, as a function of the angle (φ) of inclination of the vehicle about its longitudinal axis (x), a critical rotational speed (ωnc) of the vehicle about the longitudinal axis (x) which would be necessary to bring about rolling over, **characterized in that** in the event of the arrangement detecting a movement behaviour of the vehicle which is characteristic of overhang tilting of the vehicle it determines a prediction value for the rotational speed (ωn) of the vehicle after a virtual impact of the wheels on a longitudinal side of the vehicle against the ground starting from a rotational speed (ωv) which prevails before the virtual impact, the impetus of the vehicle in the direction of its vertical axis (z) and the rotational impetus of the centre of gravity (CM) of the vehicle before the virtual impact, and **in that** it signals an imminent rollover process if the prediction value of the rotational speed (ωn) exceeds the critical rotational speed (ωnc).

2. The arrangement according to Claim 1, **characterized in that** it calculates the predication value for the rotational speed (ωn) of the vehicle by multiplying the rotational speed (ωv) of the vehicle before the imaginary impact by a factor

$$f(\varphi) = \frac{1 - \dfrac{mr^2}{1}\cos(\varphi+\varphi 0)\cdot\cos(\varphi-\varphi 0)}{1 + \dfrac{mr^2}{1}\cos^2(\varphi+\varphi 0)}$$

I being the moment of inertia of the vehicle, m being the mass of the vehicle, r the distance between the centre of gravity of the vehicle and the wheels on one longitudinal side, φ the angle of inclination of the vehicle about its longitudinal axis (x) and φ0 the angular position of the centre of gravity of the vehicle in relation to the transverse axis (y) of the vehicle, and **in that** the arrangement calculates the critical rotational speed

$$\omega nc = \frac{\omega k}{f(\varphi)}$$

where:

$$\omega k = \pm\sqrt{\frac{2mg}{l}r(1 - \sin(\varphi + (\varphi 0))}$$

(g is the acceleration of the earth).

**Revendications**

1. Dispositif pour reconnaître un renversement prévisible d'un véhicule qui, en fonction de l'angle d'inclinaison ($\varphi$) du véhicule autour de son axe longitudinal (x), détermine une vitesse de rotation critique ($\omega nc$) du véhicule autour de son axe longitudinal (x) qui serait nécessaire pour provoquer un renversement,

   **caractérisé en ce que**

   le dispositif, au cas où il détecte un comportement de mouvement du véhicule caractéristique du basculement du véhicule sur un talus, détermine une valeur prévisionnelle pour la vitesse de rotation ($\omega n$) du véhicule après un impact fictif des roues sur un côté longitudinal du véhicule sur le sol, à partir de la vitesse de rotation ($\omega v$) qui règne avant l'impact fictif, de l'impulsion du véhicule en direction de son axe vertical (z) et de l'impulsion de rotation du centre de gravité (CM) avant l'impact fictif, et signale un renversement prévisible si la valeur prévisionnelle de la vitesse de rotation ($\omega n$) dépasse la vitesse de rotation critique ($\omega nc$).

2. Dispositif selon la revendication 1,

   **caractérisé en ce qu'**

   il calcule la valeur prévisionnelle pour la vitesse de rotation ($\omega n$) du véhicule par multiplication de la vitesse de rotation ($\omega v$) du véhicule avant l'impact fictif par un facteur

   $$f(\varphi) = \frac{1 - \dfrac{mr^2}{I} \cos(\varphi+\varphi 0)\cdot\cos(\varphi-\varphi 0)}{1 + \dfrac{mr^2}{I} \cos^2 (\varphi+\varphi 0)}$$

   dans lequel I est le moment d'inertie du véhicule, m la masse du véhicule, r la distance du centre de gravité du véhicule aux roues d'un côté longitudinal, $\varphi$ l'angle d'inclinaison du véhicule autour de son axe longitudinal (x) et $\varphi 0$ la position angulaire du centre de gravité du véhicule par rapport à l'axe transversal (y) du véhicule, et le dispositif calcule la vitesse de rotation critique

   $$\omega nc = \frac{\omega k}{f(\varphi)}$$

   dans laquelle

   $$\omega k = \pm \sqrt{\frac{2mg}{I} r(1 - \sin(\varphi + (\varphi 0))}$$

   (g est l'accélération de la pesanteur)

Fig. 1

Fig. 2

Fig. 3

Fig. 4

Fig. 5

8